## Europäisches Patentamt

(19) **European Patent Office**

**Office européen des brevets**

(11) Veröffentlichungsnummer: **0 093 882**
**B1**

(12) # EUROPÄISCHE PATENTSCHRIFT

(45) Veröffentlichungstag der Patentschrift:
04.12.85

(51) Int. Cl.⁴: **H 02 J 13/00**

(21) Anmeldenummer: **83103505.0**

(22) Anmeldetag: **11.04.83**

(54) Einkopplungsstufe für die Einkopplung von codierten Informationen auf eine Phasenleitung eines elektrischen Netzes.

(30) Priorität: **22.04.82 DE 3215063**

(43) Veröffentlichungstag der Anmeldung:
**16.11.83 Patentblatt 83/46**

(45) Bekanntmachung des Hinweises auf die Patenterteilung:
**04.12.85 Patentblatt 85/49**

(84) Benannte Vertragsstaaten:
**AT BE CH DE FR GB IT LI LU NL SE**

(56) Entgegenhaltungen:
**US - A - 2 385 673**
**US - A - 3 702 460**

(73) Patentinhaber: **Siemens Aktiengesellschaft, Berlin und München Wittelsbacherplatz 2, D-8000 München 2 (DE)**

(72) Erfinder: **Frühauf, Waldemar, Dr., Clausewitzstrasse 34, D-8500 Nürnberg (DE)**

**Beschreibung**

Die Erfindung betrifft eine Einkopplungsstufe für die Einkopplung von in Form eines durch Impulse und Impulslücken gebildeten Impulsmusters codierten Informationen auf eine Phasenleitung eines vorzugsweise in einem Gebäude installierten elektrischen Netzes, wobei das Impulsmuster als amplitudenmoduliertes Signal die Umhüllende eines im Vergleich zur Netzfrequenz und zur Grundfrequenz des Impulsmusters hochfrequenten sinusförmigen Trägerfrequenzsignals darstellt und wobei die Einkopplungsstufe zumindest zeitweilig hochohmig ist.

Eine derartige Einkopplungsstufe ist im Rahmen eines im Handel befindlichen Informationsübertragungssystems bekannt. Dieses Informationsübertragungssystem dient dazu, innerhalb eines Gebäudes, insbesondere innerhalb einer Wohnung, eine Fernsteuerung von an das in diesem Gebäude installierte elektrische Netz angeschlossenen elektrischen Geräten vorzunehmen. Hierbei werden zwischen einer an das elektrische Netz angeschlossenen zentralen Steuereinheit sowie ebenfalls an das elektrische Netz angeschlossenen und den elektrischen Geräten zugeordneten Nebeneinheiten Informationen, beispielsweise zum Ein- und Ausschalten dieser Geräte, ausgetauscht. Als Übertragungsweg dient hierbei das elektrische Netz. Die zu übertragenden Informationen sind in Form von eine Trägerfrequenz modulierenden Impulsmustern codiert. Als Informationen sind als Bitmuster codierte Adressen der Nebeneinheiten und Operationsbefehle, beispielsweise zum Ein- und Ausschalten der Geräte oder zum Dimmen von Beleuchtungseinrichtungen, zu verstehen.

Zur Aufprägung oder Übertragung des das Impulsmuster repräsentierenden Trägerfrequenzsignals ist bei dem bekannten System eine Einkopplungsstufe verwendet, die dauernd einen hohen Innenwiderstand aufweist. Dieser hohe Innenwiderstand hat aber den Nachteil, daß das tatsächlich auf dem Phasenleiter des elektrischen Netzes vorhandene Signal direkt von der momentanen Netzimpedanz abhängt, die aber zeitlich unter dem Einfluß von weiteren in dem Gebäude oder der Wohnung untergebrachten elektrischen Verbrauchern stark schwankt. Damit kann aber das die codierte Information tragende Impulsmuster bereits unmittelbar nach der Einkopplungsstufe stark gestört sein. Dies ist insbesondere vor den Maxima der Netzspannung der Fall, da hier elektrische Verbraucher, die mit gleichgerichteter und gesiebter Netzspannung arbeiten, wie z. B. Fernsehgeräte oder Stereoverstärker, starke Impedanzeinbrüche erzeugen. Diese Schwierigkeit kann teilweise durch den Einsatz von vor diesen Verbrauchern in Zwischensteckern untergebrachten Funktionseinheiten, die den Einfluß dieser Geräte mindern, beseitigt werden. Dies bedeutet jedoch einen zusätzlichen Aufwand.

Der Erfindung liegt die Aufgabe zugrunde, eine Einkopplungsstufe der eingangs genannten Art anzugeben, bei der das der Phasenleitung aufgeprägte Signal (Sinuswellenzüge) durch Schwankungen der Netzimpedanz im Spannungspegel nicht beeinträchtigt wird.

Die Aufgabe wird erfindungsgemäß dadurch gelöst, daß die Einkopplungsstufe während der Dauer eines Impulsmusters eine niederohmige Einkopplung vermittelt.

Durch eine derartige Einkopplungsstufe wird im Gegensatz zu einer dauernd hochohmigen Einkopplungsstufe der einen Impuls darstellende Sinuswellenzug auch bei einer plötzlichen starken Verringerung der Netzimpedanz in seiner Amplitude kaum beeinträchtigt, so daß eine Erhöhung in der Sicherheit der Übertragung des codierten Signals erreicht ist, ohne daß zusätzliche Maßnahmen zur Verringerung der Netzimpedanzschwankungen notwendig sind. Darüber hinaus werden durch die Niederohmigkeit der Einkopplungsstufe im aktiven Zustand auf dem Phasenleiter als Übertragungsweg vorhandene Störsignale praktisch kurzgeschlossen und daher in ihrem Pegel und damit ihrer Störfähigkeit stark beschnitten. Unter dem Begriff »niederohmig« wird in diesem Zusammenhang ein Widerstandswert von etwa 1 Ohm verstanden, die im nichtaktiven Zustand der Einkopplungsstufe vorhandene Hochohmigkeit bedeutet in diesem Fall einen Widerstandswert, der über 100 Ohm liegt. Eine solche Hochohmigkeit im nichtaktiven Zustand der Einkopplungsstufe ist insofern vorteilhaft, weil — wenn ein weiteres Informationsübertragungssystem in die Phasenleitung einspeist — im nichtaktiven Zustand des ersten Informationsübertragungssystems keine Abschwächung des vom weiteren Informationsübertragungssystem eingespeisten Signals auftreten kann.

Eine besonders vorteilhafte Ausführungsform einer solchen Einkopplungsstufe, an deren Eingang die von einem Modulator abgegebenen Impulse in Form von Sinuswellenzügen bzw. Impulslücken in Form fehlender Sinuswellenzüge anstehen, besteht darin, daß dem Eingang ein gegengekoppelt betriebenes Verstärkerelement nachgeschaltet ist, daß eine vor einer Gleichspannungsquelle gespeiste und vom Verstärkerelement gesteuerte Leistungsstufe mit mindestens einem Transistor vorgesehen ist, wobei mindestens einer der Transistoren als Emitterfolger geschaltet ist, daß zwischen dem Verstärkerelement und der Leistungsstufe mindestens ein steuerbarer elektronischer Schalter zum Einschalten bzw. Sperren des Basisstroms der Transistoren der Leistungsstufe vorgesehen ist, wobei der Basisstrom jeweils für die Dauer eines Impulsmusters durchgeschaltet ist, und daß die Leistungsstufe ausgangsseitig über ein selektives, auf die Frequenz des Trägersignals abgestimmtes Filter an die Phasenleitung angeschlossen ist. Unter der Wirkung der vom Verstärkerelement angesteuerten Leistungsstufe erfolgt eine niederohmige Einkopplung des Impulsmusters während dessen Dauer, da in diesem Fall der mindestens eine elektronische Schalter geschlossen ist. Im nichtaktiven Fall der Einkopplungsstufe, d. h. wenn kein Impulsmuster auf die Phasenleitung zu übertragen ist, wirkt durch Öffnen der steuerbaren elektronischen Schalter die Leistungsstufe — vom Phasenleiter her gesehen — hochohmig, so daß keine Beeinträchtigung des Signalpegels der von anderen Einkopplungsstufen stammenden Impulsmustern auftritt. Das selektive Filter am Ausgang der Einkopplungsstufe ist wegen seiner Abstimmung auf die Frequenz des Trägersignals der Sinuswellenzüge für diese Frequenz durchlässig und wirkt — da die Frequenz des Trägersignals erheblich über der Netzfrequenz liegt — Rückwirkungen der Netzfrequenz auf die Leistungsstufe entgegen, indem es die Netzfrequenz sperrt. Darüber hinaus sorgt das Filter dafür, daß an dem Ausgang des Filters, der den Ausgang der Einkopplungsstufe darstellt, das Störspektrum des modulierten Sinuswellenzuges ausreichend unterdrückt ist.

Eine bevorzugte Ausführungsform besteht darin, daß bei einer Leistungsstufe mit zwei Transistoren der zweite Transistor den Emitterwiderstand des als Emitter geschalteten ersten Transistors ersetzt bzw. diesem parallel geschaltet ist. Damit wird der Ruhestrom der Leistungsendstufe vermindert bzw. die Möglichkeit geschaffen, bei extrem niedriger Netzimpedanz ein ausreichendes Signal zu senden.

Als gegengekoppelt betriebenes Verstärkerelement kann ein Operationsverstärker mit einem einen ohmschen Widerstand enthaltenen Gegenkopplungszweig dienen. Ein solcher Operationsverstärker in Verstärkerbeschaltung ist außerordentlich funktionstüchtig und dazu kostengünstig.

Eine besonders vorteilhafte Ausführungsform einer solchen Einkopplungsstufe besteht darin, daß als Transistoren komplementäre Transistoren dienen, die beide als Emitterfolger geschaltet sind, wobei der Gegenkopplungszweig des Verstärkerelements endseitig an den den Ausgang der Leistungsstufe bildenden Verbindungspunkt zweier gleichartiger Anschlüsse der Transistoren angeschlossen ist, und daß der Ausgang des Verstärkerelements über zumindest einen steuerbaren elektronischen Schalter mit den Basisanschlüssen der Transistoren verbunden ist. Der einen ohmschen Widerstand enthaltende und an einem Ende am Eingang des Verstärkerelements angeschlossene Gegenkopplungszweig ist am anderen Ende also nicht an den Ausgang des Verstärkerelements angeschlossen, sondern überbrückt außer dem Verstärkerelement auch noch zumindest einen elektronischen Schalter und jeweils eine innere Diodenstrecke jedes der beiden komplementären Transistoren. Durch diese Art des Gegenkopplungszweiges wird am Ausgang der Einkopplungsstufe ein leistungsstarkes sinusförmiges Signal der Trägerfrequenz erzwungen, ohne daß Nichtlinearitäten des mindestens einen steuerbaren elektronischen Schalters sowie der komplementären Transistoren eine Deformation der Sinusform erzwingen können. Durch diese Anbindung des Gegenkopplungszweiges wird das Verstärkerelement zu einem verzerrungsfreien Leistungsverstärker, wenn der mindestens eine steuerbare elektronische Schalter geschlossen ist. Die komplementären Transistoren bilden eine Leistungsendstufe. Durch Betätigung des mindestens einen steuerbaren elektronischen Schalters, der dieser Leitungsendstufe vorgeschaltet ist, kann den komplementären Transistoren der Basisstrom entzogen werden. In diesem Fall wirkt — von der Phasenleitung her gesehen — die Einkopplungsstufe hochohmig. Ihr Widerstand ist nunmehr primär durch den im Gegenkopplungszweig angeordneten ohmschen Widerstand bestimmt, der hochohmig wählbar ist.

In einer bevorzugten Ausführungsform dienen als miteinander verbundene gleichartige Anschlüsse die Emitteranschlüsse der komplementären Transistoren.

Als komplementäre Transistoren können bipolare Leistungstransistoren dienen, die kostengünstig verfügbar sind.

Darüber hinaus können zwei steuerbare elektronische Schalter vorgesehen sein, die den Basisanschlüssen der komplementären Transistoren unmittelbar vorgeschaltet sind. Als steuerbare elektronische Schalter können Transistoren dienen.

In einer bevorzugten Ausführungsform sind die Steueranschlüsse der steuerbaren elektronischen Schalter von einem während der Dauer eines Impulsmusters aktiven Signal beaufschlagt. Dieses Signal kann beispielsweise als Aktivsignal des mit dem einen Eingang des Modulators verbundenen Codierers abgegriffen sein, wobei dieses Signal so lange vorliegt, wie der Codierer zur Codierung des gesamten Impulsmusters benötigt.

In einer bevorzugten Ausführungsform ist das selektive Filter als LC-Filter ausgebildet. Ein solches Filter stellt einen einfachen Serienresonanzkreis dar. Wenn auf demselben Phasenleiter simultan ein weiteres Informationsübertragungssystem mit unterschiedlicher Trägerfrequenz aktiv ist, wird durch das selektive Filter auch eine störende Beeinflussung zwischen beiden Informationsübertragungssystemen ausgeschlossen.

Ein alternatives Ausführungsbeispiel einer Einkopplungsstufe besteht darin, daß der Basisanschluß des als Emitterfolger geschalteten ersten Transistors über den ersten steuerbaren elektronischen Schalter mit dem Ausgang des gegengekoppelten Verstärkerelements verbunden ist, daß der zweite Transistor, dessen Steuerstrecke zu der des ersten Transistors in Serie geschaltet ist, von gleicher Art wie der erste Transistor ist, daß der Basisanschluß des zweiten Transistors mit dem Abgriff eines zwischen den Polen der Gleichspannungsquelle angeordneten Spannungsteilers verbunden ist, wobei der Spannungsteiler über den zweiten steuerbaren Schalter an den einen Pol der Spannungsquelle schaltbar ist, und daß der Abgriff des Spannungsteilers über einen Kondensator mit dem dem ersten Transistor zugewandten Anschluß eines zwischen diesem ersten Transistor und dem einen Pol der Spannungsquelle angeordneten Hilfswiderstandes verbunden ist. In diesem Fall ist es ausreichend, den Gegenkopplungszweig des Verstärkerelements lediglich in an sich üblicher Weise über den einen Eingang und dem Ausgang dieses Verstärkerelements anzuordnen, da in dieser Schaltung der Leistungsstufe diese von vornherein eine gute Linearität aufweist, da keine Übernahmeverzerrungen der Sinuswellenform auftreten. Die Leistungsstufe braucht deshalb in diesem Fall nicht in den Gegenkopplungszweig des Verstärkerelements einbezogen zu werden.

Die Erfindung wird im folgenden anhand von Ausführungsbeispielen in den Fig. 1 bis 8 näher erläutert. Dabei zeigt

Fig. 1 ein vereinfachtes Beispiel eines als Befehlstelegramm dienenden Impulsmusters, wie es als trägerfrequentes Signal am Eingang der Einkopplungsstufe erscheint,

Fig. 2 ein erstes grundsätzliches Ausführungsbeispiel einer erfindungsgemäßen Einkopplungsstufe mit vorgeschalteten Funktionseinheiten zur Erzeugung des als Befehlstelegramm dienenden Impulsmusters,

Fig. 3 ein zweites Ausführungsbeispiel, bei dem die Leistungsstufe zwei als Emitterfolger geschaltete komplementäre Transistoren aufweist und die Leistungsstufe in den Gegenkopplungszweig des Verstärkerelements einbezogen ist,

Fig. 4 einen einen Impuls darstellenden Sinuswellenzug am Eingang der Einkopplungsstufe,

Fig. 5 das Ausgangssignal am Ausgang des als Operationsverstärker ausgebildeten Verstärkerelements nach Fig. 3,

Fig. 6 das am Ausgang der Leistungsstufe der nach Fig. 3 ausgebildeten Einkopplungsstufe erzeugte Signal,

Fig. 7 das am Ausgang der Leistungstufe im Falle des in Fig. 3 dargestellten Ausführungsbeispiels auftretende Signal, wenn der Gegenkopplungszweig ausschließlich das als Operationsverstärker ausgebildete Verstärkerelement überbrücken würde, und

Fig. 8 ein drittes Ausführungsbeispiel einer erfindungsgemäßen Einkopplungsstufe.

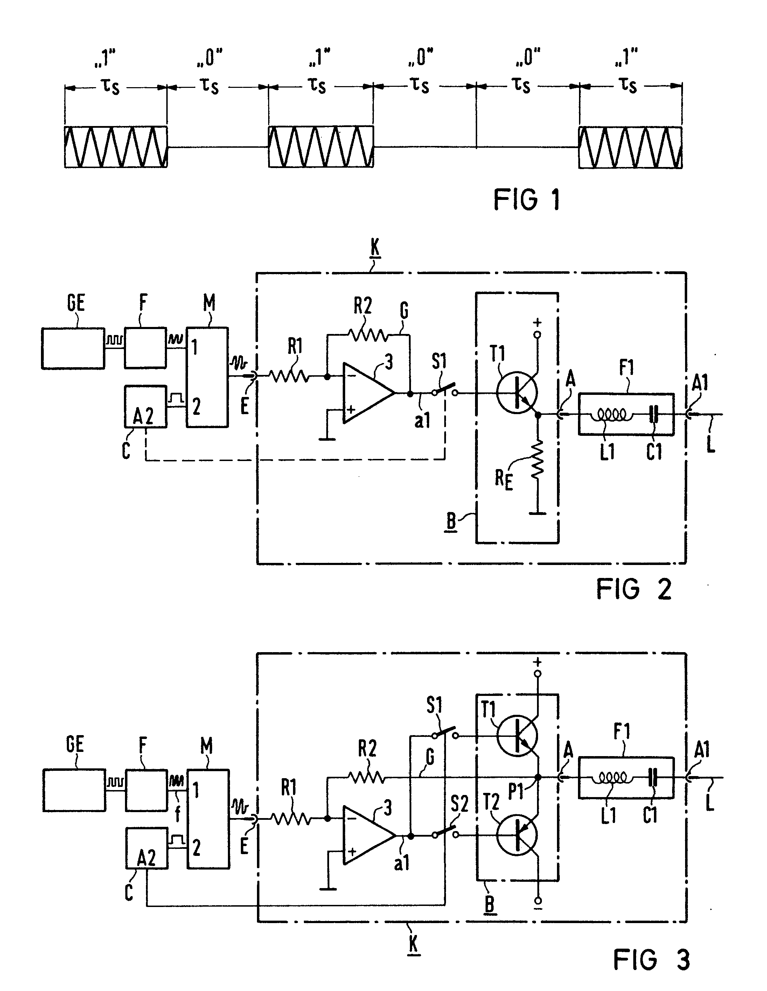

Das in Fig. 1 dargestellte als Adreß- oder Befehlstelegramm dienende Impulsmuster stellt eine Folge von Impulsen und Impulslücken der jeweils gleichen Zeitdauer $\tau_s$ dar. Hierbei wird ein Impuls jeweils durch einen Sinuswellenzug (Burst) des Trägerfrequenzsignals repräsentiert. Unter der Vereinbarung, daß ein Impuls jeweils den logischen Wert »1« darstellt, veranschaulicht das in Fig. 1 dargestellte Impulsmuster die Zeichenfolge »1«-»0«-»1«-»0«-»0«-»1«. Ein solches Telegramm wird durch die in Fig. 2, 3 und 8 dargestellten Ausführungsbeispiele einer Einkopplungsstufe K an deren Ausgang A1 auf die Phasenleitung L aufgeprägt. Aus Fig. 1 ist ersichtlich, daß die Frequenz der Sinuswellenzüge und damit des Trägersignals erheblich über der Grundfrequenz des Impulsmusters liegt. Die Grundfrequenz des Impulsmusters liegt ihrerseits erheblich über der Netzfrequenz. Die Grundfrequenz des Impulsmusters beträgt in praktischen Fällen beispielsweise 4,8 kHz, die Trägerfrequenz 90 kHz.

In den anschließend erörterten Ausführungsbeispielen sind für übereinstimmende Elemente auch jeweils übereinstimmende Bezugszeichen gewählt.

Bei den in den Fig. 2, 3 und 8 dargestellten Ausführungsbeispielen ist zur Erzeugung der Trägerfrequenz ein Rechteckgenerator GE eingesetzt. Das Ausgangssignal des Rechteckgenerators GE wird durch einen Filterbaustein F zum sinusförmigen Trägersignal gewandelt. Dieses sinusförmige Trägersignal f ist dem einen Eingang 1 eines Modulators M zugeführt. Am zweiten Eingang 2 dieses Modulators M steht als amplitudenmodulierendes Signal das Ausgangssignal eines Codierers C an. Das aus Sinuswellenzügen und Pausen entsprechender Dauer aufgebaute Ausgangssignal des Modulators M ist jeweils dem Eingang E der Einkopplungsstufe K zugeführt.

In dem in Fig. 2 dargestellten Ausführungsbeispiel steht dieses Eingangssignal über den ohmschen Widerstand R1 am invertierenden Eingang eines als Verstärkerelement dienenden Operationsverstärkers 3 an. Der nichtinvertierende Eingang liegt auf Bezugspotential. Der Ausgang a1 des Operationsverstärkers 3 ist über den den ohmschen Widerstand R2 enthaltenden Gegenkopplungszweig G mit dem invertierenden Eingang des Operationsverstärkers 3 verbunden. Der Operationsverstärker 3 stellt zusammen mit dem Widerstand R1 sowie seinem Gegenkopplungszweig G ein gegengekoppelt betriebenes Verstärkerelement dar. Der Ausgang a1 ist über den steuerbaren elektronischen Schalter S1 an den Basisanschluß des Transistors T1 angeschlossen. Die als Steuerstrecke bezeichnete Kollektor-Emitter-Strecke dieses Transistors T1 ist einerseits an den Pluspol einer Gleichspannungsquelle und andererseits über den Emitterwiderstand $R_E$ an das mit dem anderen Pol der Gleichspannungsquelle verbundene Bezugspotential angeschlossen. Dieser Transistor T1 ist als Emitterfolger geschaltet und stellt die Leistungsstufe B dar. Der Ausgang A der Leistungsstufe B ist mit dem Emitteranschluß des Transistors T1 verbunden. Der Ausgang A der Leistungsstufe B ist über ein selektives, auf die Frequenz des Trägersignals abgestimmtes Filter F1 mit dem Ausgang A1 der Einkopplungsstufe K verbunden. Am Ausgang A1 der Einkopplungsstufe ist die Phasenleitung L des elektrischen Netzes angeschlossen. Das selektive Filter F1 ist vorzugsweise als LC-Filter mit den Elementen L1 und C1 ausgebildet. Diese Elemente bilden einen auf die Frequenz des Trägersignals abgestimmten Serienresonanzkreis. Als Transistor T1 ist vorzugsweise ein bipolarer Leistungstransistor eingesetzt. Auch als steuerbarer elektronischer Schalter S1 dient vorzugsweise ein Transistor. Dieser Transistor wird jeweils für die Dauer eines aus einer Vielzahl von Impulsen und Impulslücken bestehenden Impulsmusters geschlossen, so daß das am Ausgang a1 des Operationsverstärkers 3 auftretende Signal zur Steuerung des Transistors T1 zur Wirkung kommt. Das Einschaltsignal für den steuerbaren elektronischen Schalter S1 kann beispielsweise von einem Ausgang A2 des Codierers C abgeleitet sein, wobei dieser Ausgang jeweils für die Dauer eines Impulsmusters ein Aktivsignal liefert.

Der Ausgangswiderstand $R_a$ am Ausgang A der Leistungsstufe B beträgt $R_a = R_E/b$, wobei b die Stromverstärkung des Transistors T1 ist. Der vom Phasenleiter L unter Vernachlässigung des selektiven Filters F1 »gesehene« Widerstand beträgt, wenn der steuerbare elektronische Schalter S1 geöffnet ist, $R_E$. Um im nichtaktiven Zustand der Einkopplungsstufe K, d. h., wenn der steuerbare elektronische Schalter S1 geöffnet ist, die Einkopplungsstufe K — von der Phasenleitung L her gesehen — möglichst hochohmig wirken zu lassen, ist der Emitterwiderstand $R_E$ möglichst hochohmig zu wählen. Der Emitterwiderstand $R_E$ begrenzt aber anderseits die Stromergiebigkeit der Leistungsstufe B, wenn der steuerbare elektronische Schalter S1 geschlossen ist, wodurch die Wahlfreiheit bezüglich der Größe des Emitterwiderstandes $R_E$ begrenzt wird.

In diesem einfachsten, in der Fig. 2 dargestellten Ausführungsbeispiel werden im aktiven Zustand der Einkopplungsstufe K, also bei geschlossenem steuerbaren elektronischen Schalter S1, nur bei hoher Netzimpedanz oder niedrigem Emitterwiderstand $R_E$ unverzerrte Sinuswellenzüge am Ausgang A der Leistungsstufe B auftreten.

Die in Verbindung mit dem in Fig. 2 dargestellten Ausführungsbeispiel erwähnte Begrenzung der Stromergiebigkeit der Leistungsstufe B durch den Emitterwiderstand $R_E$ kann dadurch überwunden werden, daß dieser Emitterwiderstand $R_E$ durch einen weiteren Transistor T2 ersetzt bzw. unterstützt wird, dessen Basisstrom ebenfalls durch den ersten steuerbaren elektronischen Schalter bzw. einen weiteren steuerbaren elektronischen Schalter eingeschaltet bzw. gesperrt werden kann.

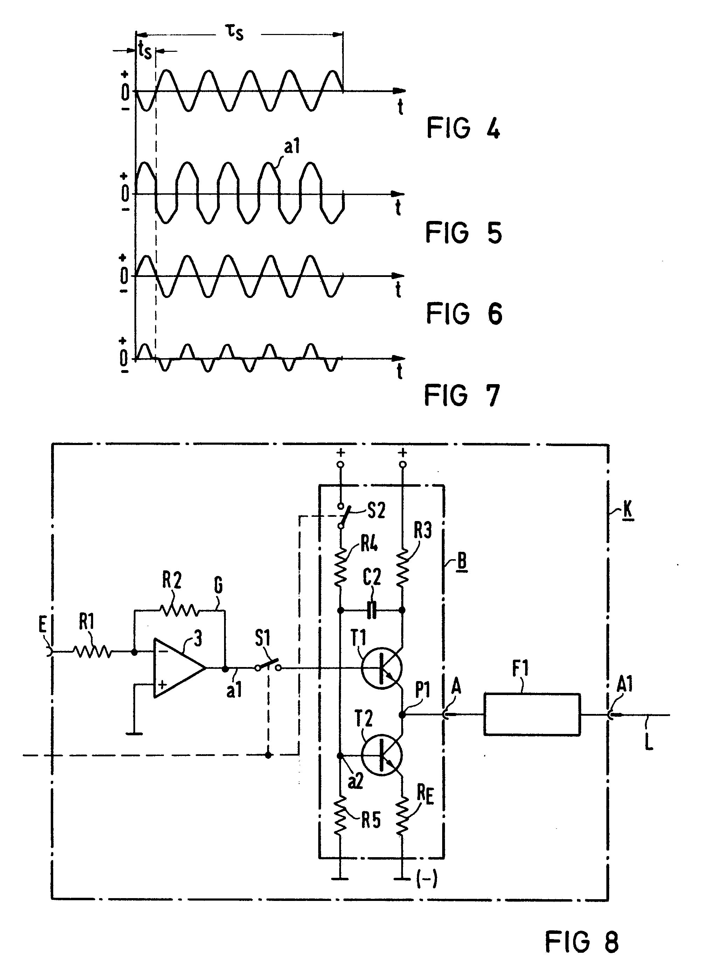

Von diesem Lösungsgedanken wird in den in Fig. 3 und 8 dargestellten Ausführungsbeispielen Gebrauch gemacht. Darüber hinaus ermöglichen es die in den genannten Figuren genannten Ausführungsbeispiele, daß auch bei niedriger Netzimpedanz am Ausgang A der Leistungsstufe B bei den Impulsen des Impulsmusters aus Sinusvollwellen bestehende Sinuswellenzüge zur Verfügung stehen, so daß an das selektive Filter niedrigere Anordnungen gestellt werden können.

Bei dem in Fig. 3 dargestellten Ausführungsbeispiel steht ebenfalls das am Eingang E der Einkopplungsstufe K vorhandene Eingangssignal — wie in dem in Fig. 2 dargestellten Ausführungsbeispiel — über den ohmschen Widerstand R1 am invertierenden Eingang des als Operationsverstärker 3 ausgebildeten Verstärkerelements an. Der nichtinvertierende Eingang des Operationsverstärkers 3 liegt auf Bezugspotential. Der Ausgang a1 des Operationsverstärkers 3 ist einerseits über einen ersten steuerbaren elektronischen Schalter S1 an die Basis eines bipolaren Leistungstransistors T1 und andererseits über einen zweiten steuerbaren elektronischen Schalter S2 an die Basis eines zweiten bipolaren Leistungstransistors T2 geführt. Die beiden Leistungstransistoren T1 und T2 sind komplementäre Transistoren, wobei der Leistungstransistor T1 als npn-Transistor, der Leistungstransistor T2 als pnp-Transistor ausgeführt ist. Die Emitter dieser beiden Leistungstransistoren T1 und T2 sind im Verbindungspunkt P1 zusammengeführt und bilden den Ausgang A dieser aus den beiden Transistoren T1 und T2 bestehenden Leistungsstufe B. Die beiden Transistoren T1 und T2 sind als Emitterfolger geschaltet, so daß sich eine komplementäre Emitterfolgerschaltung ergibt. Der den ohmschen Widerstand R2 aufweisende Gegenkopplungszweig G des Operationsverstärkers 3 ist einerseits an dessen invertierenden Eingang, andererseits an den Verbindungspunkt P1 angeschlossen. Dieser Gegenkopplungszweig G überbrückt somit außer dem Operationsverstärker 3 auch noch die beiden steuerbaren elektronischen Schalter S1 und S2 sowie die nachgeschalteten Basis-Emitter-Strecken der beiden Leistungstransistoren T1 und T2. Durch diese Anbindung des Gegenkopplungszweiges G ist die Leistungsstufe B mit in die Gegenkopplung des Operationsverstärkers 3 einbezogen, wobei die bei dieser Schaltung der Leistungsstufe B an sich auftretenden Übernahmeverzerrungen der Sinuswellenform während der Nulldurchgänge dieses Signals ausgeglichen werden. Besonderer Vorteil dieser Schaltung ist, daß kein Ruhestrom (Querstrom) fließt und somit die der Gleichspannungsquelle entnommene Leistung voll als Sendeleistung genutzt wird.

Als steuerbare elektronische Schalter S1 und S2 können bipolare Transistoren oder Feldeffekttransistoren gewählt werden. Die beiden steuerbaren elektronischen Schalter S1 und S2 sind jeweils für die gesamte Dauer des durch ein Impulsmuster dargestellten Befehlstelegramms geschlossen. Es ist allerdings ersichtlich, daß die beiden Schalter S1 und S2 auch durch einen einzigen, direkt dem Ausgang des Operationsverstärkers 3 nachgeschalteten Schalter ersetzt werden können.

Der Kollektor des Leistungstransistors T1 wird von der positiven Spannung einer Gleichspannungsquelle gespeist, während der Kollektor des Leistungstransistors T2 mit der negativen Spannung dieser Spannungsquelle bzw. dem Bezugspotential verbunden ist.

Auch hier wirkt das auf die Trägerfrequenz abgestimmte selektive Filter F1 als Sendefilter, durch das die Sinuswellenzüge niederohmig auf die Phasenleitung L übertragen werden.

Die Einkopplungsstufe K arbeitet hierbei wie folgt: Bei Eingang eines ein Adreß- oder Befehlstelegramm darstellenden Impulsmusters am Eingang E der Einkopplungsstufe K sind die beiden steuerbaren elektronischen Schalter S1 und S2 für die Telegramm-Dauer geschlossen. Ein Impuls des Impulsmusters wird hierbei durch einen beispielhaft in Fig. 4 dargestellten trägerfrequenten Sinuswellenzug von der Dauer $\tau_s$ dargestellt. Am Ausgang a1 des Operationsverstärkers 3 tritt hierbei das in Fig. 5 dargestellte Ausgangssignal des Operationsverstärkers auf und ist über die geschlossenen steuerbaren elektronischen Schalter S1 und S2 an die Basis der Leistungstransistoren T1 und T2 geführt. Für die Zeitspanne $t_s$ der ersten Sinushalbwelle des Sinuswellenzuges steuert die ins Positive gehende Sinushalbwelle am Ausgang a1 des Operationsverstärkers 3 den Transistor T1 analog durch. Das am Verbindungspunkt P1 dabei auftretende Signal wird über den den ohmschen Widerstand R2 enthaltenden Gegenkopplungszweig G auf den invertierenden Eingang des Operationsverstärkers zurückgeführt, an dem über den Widerstand R1 ein ideal sinuswellenförmiges Signal (Fig. 4) ansteht. Unter der Wirkung des Operationsverstärkers 3 wird nun das Signal am Ausgang a1 des Operationsverstärkers 3 so beeinflußt, daß im Verbindungspunkt P1 und damit am Ausgang A der Verstärkerstufe B ebenfalls ein ideal sinuswellenförmiges Signal erzwungen wird. Dieses Signal ist in Fig. 6 dargestellt.

Dabei spielen der im Einschaltzustand der elektronischen Schalter S1 und S2 auftretende Restwiderstand sowie Nichtlinearitäten der Kennlinie dieser beiden Schalter S1 und S2 und auch der Leistungstransistoren T1 und T2 keinerlei Rolle mehr. Diese werden vielmehr durch die Wirkung des Gegenkopplungszweigs G wirkungsmäßig nahezu vollkommen eliminiert. Deshalb können als elektronische Schalter jede beliebige Art solcher Schalter eingesetzt werden, selbst wenn diese im Einschaltzustand relativ hochohmig sind. Die Leistungstransistoren T1 und T2 leiten nur dann, wenn ihre Basis-Emitter-Spannung größer ist als die Schwellwertspannung der Basis-Emitter-Diode. Für Leistungstransistoren auf Siliziumbasis bedeutet dies, daß der npn-Transistor T1 dann durchgesteuert ist, wenn seine Basis-Emitter-Spannung größer als 0,7 V ist, wohingegen der als pnp-Transistor ausgebildete Leistungstransistor T2 dann durchgesteuert wird, wenn seine Basis-Emitter-Spannung kleiner als −0,7 V ist. Dies würde ohne die dargestellte Art des Gegenkopplungszweiges G zu einem Signalverlauf am Ausgang A der Leistungsstufe B führen, wie er in Fig. 7 dargestellt ist. Durch die Wirkung des Operationsverstärkers 3 und des Gegenkopplungszweiges G spielt dies jedoch keine Rolle mehr, da das am Ausgang a1 des Operationsverstärkers 3 auftretende Signal jeweils im Bereich der Nulldurchgänge der Sinuswellenzüge entsprechend erhöht bzw. verringert wird, wie aus Fig. 5 ersichtlich ist. Bei der in Fig. 4 dargestellten zweiten, ins Positive gehenden Halbwelle des Sinuswellenzugs löst der Leistungstransistor T2 den während der vorangehenden Zeitspanne $t_s$ leitenden Leistungstransistor T1 in der Stromführung ab. Mit dem Schließen der steuerbaren elektronischen Schalter S1 und S2 wird die durch die beiden Leistungstransistoren T1 und T2 gebildete Leistungsstufe B Bestandteil des gegengekoppelten Operationsverstärkers 3, der somit als Leistungsoperationsverstärker wirkt. Am Ausgang A der Leistungsstufe B und wegen der Selektivität des Filters F1 auch am Ausgang A1 der Einkopplungsstufe K wirkt diese somit sehr niederohmig mit einem Widerstandswert von etwa 1 Ohm und der Verstärkung −R2/R1. Der trägerfrequente Sinuswellenzug gelangt somit sehr niederohmig über das auf die Trägerfrequenz abgestimmte selektive Filter F1 auf den am Ausgang A1 der Einkopplungsstufe K angeschlossenen Phasenleiter L.

Durch das Öffnen der beiden steuerbaren elektronischen Schalter S1 und S2 zu den Zeiten, in denen kein Adreß- oder Befehlstelegramm in Form eines Impulsmusters durchgegeben wird, wird den beiden Leistungstransistoren T1 und T2 der Basisstrom entzogen, so daß diese hochohmig werden. Der vom Phasenleiter L am Ausgang A1 der Einkopplungsstufe K »gesehene« Widerstand ist — unter Vernachlässigung des Filters F1 — durch den Widerstand R2 gegeben, der hochohmig wählbar ist.

In Fig. 8 ist ein drittes Ausführungsbeispiel einer erfindungsgemäßen Einkopplungsstufe K dargestellt, wobei in diesem Fall die dieser Einkopplungsstufe vorgeschalteten Funktionseinheiten weggelassen sind. Das über den Gegenkopplungszweig G gegengekoppelt betriebene Verstärkerelement 3 ist hierbei ebenso ausgebildet, wie das im Zusammenhang mit dem in der Fig. 2 dargestellten Ausführungsbeispiel beschrieben ist. Die Leistungsstufe B enthält hierbei im Gegensatz zu dem in Fig. 3 dargestellten Ausführungsbeispiel zwei Transistoren T1 und T2 gleichen Typs, wobei auch hier die Steuerstrecken der beiden Transistoren T1 und T2 in Reihe geschaltet sind. Der Transistor T2 ist über den Emitterwiderstand $R_E$ an den negativen Pol der Gleichspannungsquelle bzw. das Bezugspotential angeschlossen. Zwischen dem ersten Transistor T1 und dem positiven Pol der Gleichspannungsquelle ist ein Hilfswiderstand R3 angeordnet. Der Verbindungspunkt P1 zweier ungleichartiger Anschlüsse der Transistoren T1 und T2 ist mit dem Ausgang A der Leistungsstufe B verbunden. Darüber hinaus weist die Leistungsstufe B einen zwischen dem positiven Pol und dem negativen Pol der Gleichspannungsquelle bzw. dem Bezugspotential liegenden Spannungsteiler aus den Widerständen R4 und R5 auf, wobei dieser Spannungsteiler über den zweiten steuerbaren elektronischen Schalter S2 an den positiven Pol der Gleichspannungsquelle schaltbar ist. Der Abgriff a2 dieses Spannungsteilers ist über den Kondensator C2 kapazitiv mit dem Kollektor des ersten Transistors T1 verbunden. Darüber hinaus ist der Abgriff a2 des Spannungsteilers an den Basisanschluß des Transistors T2 geführt. Der Basisanschluß des Transistors T1 ist über den ersten steuerbaren Schalter S1 mit dem Ausgang a1 des gegengekoppelten Verstärkerelements 3 verbunden. Wie in den bisherigen Ausführungsbeispielen ist das Signal am Ausgang A der Leistungsstufe B über das selektive Filter F1 an den Ausgang A1 der Einkopplungsstufe K geführt.

Der zweite Transistor T2 ist hierbei als gesteuerte Stromquelle geschaltet. Die beiden steuerbaren elektronischen Schalter S1 und S2 werden auch hier für die Gesamtdauer eines Impulsmusters simultan geschlossen. Der zweite steuerbare Schalter S2 schaltet hierbei die Gleichspannungsquelle an den aus den Widerständen R4 und R5 bestehenden Spannungsteiler, der die Basisvorspannung für den Transistor T2 und damit dessen Basisstrom liefert. Um den unvermeidlichen Ruhestrom dieser Schaltung gering zu halten und bei Bedarf trotzdem hohe Lastströme auch in negativer Richtung zu ermöglichen, wird die Basisvorspannung des Transistors T2 lastabhängig gesteuert. Diese Steuerspannung wird am Hilfswiderstand R3 abgegriffen und über den Kondensator C2 kapazitiv auf den Basisanschluß des Transistors T2 übergekoppelt. Da bei dieser Schaltung der Leistungsstufe B im Gegensatz zu der in Fig. 3 dargestellten keine Übernahmeverzerrungen im Bereich der Nulldurchgänge der Sinuswellenzüge auftreten, ist es hier nicht, wie bei dem in Fig. 3 dargestellten Ausführungsbeispiel, erforderlich, die Leistungsstufe B in den Gegenkopplungszweig G mit einzubeziehen.

Durch die erfindungsgemäße Einkopplungsstufe wird also eine niederohmige Einkopplung des auf den Phasenleiter L zu übertragenden Signals ermöglicht, so daß selbst im Falle eines mit hohen Impedanzschwankungen behafteten Netzes der Spannungspegel des die codierte Information tragenden Signals weitgehend unbeeinträchtigt bleibt.

Darüber hinaus werden auf dem installierten Netz vorhandene transiente Störungen durch die im Einkopplungszeitpunkt vorliegende Niederohmigkeit praktisch kurzgeschlossen und damit stark geschwächt. Im hochohmigen Zustand der Einkopplungsstufe werden von gleichartigen Informationsübertragungssystemen stammende, auf dem Phasenleiter vorhandene trägerfrequente Signale mit gleicher Trägerfrequenz nahezu nicht gedämpft.

**Patentansprüche**

1. Einkopplungsstufe (K) für die Einkopplung von in Form eines durch Impulse und Impulslücken gebildeten Impulsmusters codierten Informationen auf eine Phasenleitung (L) eines vorzugsweise in einem Gebäude installierten elektrischen Netzes, wobei das Impulsmuster als amplitudenmoduliertes Signal die Umhüllende eines im Vergleich zur Netzfrequenz und zur Grundfrequenz des Impulsmusters hochfrequenten sinusförmigen Trägerfrequenzsignals darstellt und wobei die Einkopplungsstufe (K) zumindest zeitweilig hochohmig ist, dadurch gekennzeichnet, daß die Einkopplungsstufe (K) während der Dauer eines Impulsmusters eine niederohmige Einkopplung vermittelt.

2. Einkopplungsstufe nach Anspruch 1, an deren Eingang (E) die von einem Modulator (M) abgegebenen Impulse in Form von Sinuswellenzügen bzw. Impulslücken in Form fehlender Sinuswellenzüge anstehen, dadurch gekennzeichnet, daß dem Eingang (E) ein gegengekoppelt betriebenes Verstärkerelement (3) nachgeschaltet ist, daß eine von einer Gleichspannungsquelle ($\pm$) gespeiste und vom Verstärkerelement (3) gesteuerte Leistungsstufe (B) mit mindestens einem Transistor (T1, T2) vorgesehen ist, wobei mindestens einer (T1) der Transistoren (T1, T2) als Emitterfolger geschaltet ist, daß zwischen dem Verstärkerelement (3) und der Leistungsstufe (B) mindestens ein steuerbarer elektronischer Schalter (S1, S2) zum Einschalten bzw. Sperren des Basisstroms der Transistoren (T1, T2) der Leistungsstufe (B) vorgesehen ist, wobei der Basisstrom jeweils für die Dauer eines Impulsmusters durchgeschaltet ist, und daß die Leistungsstufe (B) ausgangsseitig über ein selektives, auf die Frequenz des Trägersignals abgestimmtes Filter (F1) an die Phasenleitung (L) angeschlossen ist.

3. Einkopplungsstufe nach Anspruch 2, dadurch gekennzeichnet, daß bei einer Leistungsstufe (B) mit zwei Transistoren (T1, T2) der zweite Transistor (T2) den Emitterwiderstand ($R_E$) des als Emitterfolger geschalteten ersten Transistors (T1) ersetzt oder diesem parallel geschaltet ist.

4. Einkopplungsstufe nach Anspruch 2 oder 3, dadurch gekennzeichnet, daß als gegengekoppelt betriebenes Verstärkerelement (3) ein Operationsverstärker mit einem einen ohmschen Widerstand (R2) enthaltenden Gegenkopplungszweig (G) dient.

5. Einkopplungsstufe nach Anspruch 4, dadurch gekennzeichnet, daß als Transistoren (T1, T2) komplementäre Transistoren dienen, die beide als Emitterfolger geschaltet sind, wobei der Gegenkopplungszweig (G) des Verstärkerelements (3) endseitig an den den Ausgang (A) der Leistungsstufe (B) bildenden Verbindungspunkt (P1) zweier gleichartiger Anschlüsse der Transistoren (T1, T2) angeschlossen ist, und daß der Ausgang (a1) des Verstärkerelements (3) über zumindest einen steuerbaren elektronischen Schalter (S1, S2) mit den Basisanschlüssen der Transistoren (T1, T2) verbunden ist.

6. Einkopplungsstufe nach Anspruch 5, dadurch gekennzeichnet, daß als miteinander verbundene gleichartige Anschlüsse die Emitteranschlüsse der komplementären Transistoren (T1, T2) dienen.

7. Einkopplungsstufe nach Anspruch 5, dadurch gekennzeichnet, daß als komplementäre Transistoren (T1, T2) bipolare Leistungstransistoren dienen.

8. Einkopplungsstufe nach einem der Ansprüche 5 bis 7, dadurch gekennzeichnet, daß zwei steuerbare elektronische Schalter (S1, S2) vorgesehen sind, die den Basisanschlüssen der komplementären Transistoren (T1, T2) unmittelbar vorgeschaltet sind.

9. Einkopplungsstufe nach einem der Ansprüche 2 bis 8, dadurch gekennzeichnet, daß als steuerbare elektronische Schalter (S1, S2) Transistoren dienen.

10. Einkopplungsstufe nach einem der Ansprüche 2 bis 6, dadurch gekennzeichnet, daß die Steueranschlüsse der steuerbaren elektronischen Schalter (S1, S2) von einem während der Dauer eines Impulsmusters aktiven Signal beaufschlagt sind.

11. Einkopplungsstufe nach einem der Ansprüche 1 bis 10, dadurch gekennzeichnet, daß das selektive Filter (F1) als LC-Filter ausgebildet ist.

12. Einkopplungsstufe nach Anspruch 3, dadurch gekennzeichnet, daß der Basisanschluß des als Emitterfolger geschalteten ersten Transistors (T1) über den ersten steuerbaren elektronischen Schalter (S1) mit dem Ausgang (a1) des gegengekoppelten Verstärkerelements (3) verbunden ist, daß der zweite Transistor (T2), dessen Steuerstrecke zu der des ersten Transistors (T1) in Serie geschaltet ist, von gleicher Art wie der erste Transistor (T1) ist, daß der Basisanschluß des zweiten Transistors (T2) mit dem Abgriff (a2) eines zwischen den Polen der Gleichspannungsquelle (±) angeordneten Spannungsteilers (R4, R5) verbunden ist, wobei der Spannungsteiler (R4, R5) über den zweiten steuerbaren Schalter (S2) an den einen Pol (+) der Spannungsquelle schaltbar ist, und daß der Abgriff (a2) des Spannungsteilers (R4, R5) über einen Kondensator (C2) mit dem dem ersten Transistor (T1) zugewandten Anschluß eines zwischen diesem Transistor (T1) und dem einen Pol (+) der Spannungsquelle angeordneten Hilfswiderstandes (R3) verbunden ist (Fig. 8).

## Claims

1. A coupling stage (K) for coupling information coded as a pulse pattern of pulses and pulse gaps, on a phase line of an electric network, preferably installed in a building, wherein the pulse pattern is an amplitude-modulated signal formed by the envelope of a sinusoidal carrier frequency signal having a frequency that is high compared to the network frequency and the fundamental frequency of the pulse pattern, and wherein the coupling stage (K) is at least temporarily highohmic, characterised in that the coupling stage (K) brings about low-ohmic coupling during the duration of a pulse pattern.

2. A coupling stage as claimed in claim 1, to whose input pulses emitted by a modulator (M) are supplied in the form of sine wave trains, or pulse gaps, represented by the absence of sine wave trains, as the case may be, characterised in that the input (E) is followed by an amplifier element (3) operated with negative feedback, that a power stage (B) fed by a direct voltage source(±) and controlled by the amplifier element (3) is provided with at least one transistor (T1, T2), at least one of the transistors (T1, T2) being switched as an emitter follower, that there is arranged between the amplifier element (3) and the power stage (B) at least one controllable electronic switch (S1, S2) for switching on or blocking the base current of the transistors (T1, T2) of the power stage (B), where the base current is respectively switched through for the duration of a pulse pattern, and that at the output end the power stage (B) is connected to the phase line (L) by means of a selective filter (F1) adjusted to the frequency of the carrier signal.

3. A coupling stage as claimed in claim 2, characterised in that in a power stage (B) with two transistors (T1, T2) the second transistor (T2) serves as the mitter resistance ($R_E$) of the first transistor (T1), which is switched as an emitter follower, or is switched parallel thereto.

4. A coupling stage as claimed in claim 2 or 3, characterised in that an operational amplifier having a negative feedback branch (G), which comprises an omic resistance, serves as an amplifier element (3) operated with negative feedback.

5. A coupling stage as claimed in claim 4, characterised in that complementary transistors, both switched as emitter followers, serve as transistors (T1, T2), where at the end, the negative feedback branch (G) of the amplifier element (3) is connected to the connection point (P1) of two similar terminals of the transistors (T1, T2) to form the output (A) of the power stage (B), and that the output (a1) of the amplifier element (3) is connected to the base terminals of the transistors (T1, T2) by means of at least one controllable electronic switch (S1, S2).

6. A coupling stage as claimed in claim 5, characterised in that the emitter terminals of the complementary transistors (T1, T2) serve as mutually connected similar terminals.

7. A coupling stage as claimed in claim 5, characterised in that bipolar power transistors serve as complementary transistors (T1, T2).

8. A coupling stage as claimed in one of claims 5 to 7, characterised in that there are provided two controllable electronic switches (S1, S2) which directly precede the base terminals of the complementary transistors (T1, T2).

9. A coupling stage as claimed in one of claims 2 to 8, characterised in that transistors serve as controllable electronic switches (S1, S2).

10. A coupling stage as claimed in one of claims 2 to 6, characterised in that the control terminals of the controllable electronic switches (S1, S2) are acted upon by a signal which is active during the duration of a pulse pattern.

11. A coupling stage as claimed in one of claims 1 to 10, characterised in that the selective filter (F1) is designed as an LC-filter.

12. A coupling stage as claimed in claim 3, characterised in that the base terminal of the first transistor (T1), controlled as an emitter follower, is connected to the output (a1) of the inversely coupled amplifier element (3) by means of the first controllable electronic switch (S1), that the second transistor (T2), whose control path is seriesconnected to that of the first transistor (T1), is of the same type as the first transistor (T1), that the base terminal of the second transistor (T2) is connected to the tap (a2) of a voltage divider (R4, R5) arranged between the poles of the direct voltage source (±), where the voltage divider (R4, R5) can be connected to the one pole (+) of the voltage source by means of the second controllable switch (S2), and that by means of a capacitor (C2) the tap (a2) of the voltage divider (R4, R5) is connected to that terminal adjacent the first transistor (T1), of an auxiliary resistor (R3) arranged between the transistor (T1) and the one pole (+) of the voltage source (Fig. 8).

## Revendications

1. Etage de couplage (K) utilisé pour l'injection par couplage d'informations, codées sous la forme d'un profil d'impulsions formé par des impulsions et par des intervalles entre impulsions, dans un conducteur de phase (L) d'un réseau électrique installé de préférence dans un bâtiment, le profil d'impulsions représentant, sous la forme d'un signal modulé en amplitude, l'enveloppe d'un signal sinusoîdal à fréquence porteuse, possédant une fréquence élevée par rapport à la fréquence du réseau et à la fréquence de base du profil d'impulsions, et l'étage de couplage (K) présentant une forte valeur ohmique au moins par intervalles, caractérisé par le fait que l'étage de couplage (K) réalise une injection par couplage à faible valeur ohmique, pendant la durée d'un profil d'impulsions.

2. Etage de couplage suivant la revendication 1, à l'entrée (E) duquel sont appliquées les impulsions, délivrées par un modulateur (M), sous la forme de trains d'ondes sinusoîdales ou d'intervalles entre impulsions sous la forme d'interruption des trains d'ondes sinusoîdales, caractérisé par le fait qu'en aval de l'entrée (E) se trouve branché un élément amplificateur (3) fonctionnant en contre-réaction, et qu'il est prévu un étage de puissance (B) alimenté par une source de tension continue (±) et est commandé par l'élément amplificateur (3) et comportant au moins un transistor (T1, T2), au moins l'un (T1) des transistors (T1, T2) étant branché en émetteur-suiveur, qu'un commutateur électronique commandable (S1, S2) servant à réaliser l'application ou le blocage du courant de base des transistors (T1, T2) de l'étage de puissance (B) est prévu entre l'élément amplificateur (3) et l'étage de puissance (B), le courant de base étant transmis directement pendant chacune des durées d'un profil d'impulsions, et que l'étage de puissance (B) est raccordé, du côté sortie, par l'intermédiaire d'un filtre sélectif (F1) accordé sur la fréquence du signal de porteuse, au conducteur de phase (L).

3. Etage de couplage suivant la revendication 2, caractérisé par le fait que dans le cas d'un étage de puissance (B) comportant deux transistors (T1, T2), le second transistor (T2) remplace la résistance d'émetteur (RE) du premier transistor (T1) branché en tant qu'émetteur-suiveur, ou est branché en parallèle avec ce dernier.

4. Etage de couplage suivant la revendication 2 ou 3, caractérisé par le fait qu'un amplificateur opérationnel possédant une branche de contre-réaction (G) contenant une résistance ohmique (R2) est utilisé en tant qu'élément amplificateur (3) fonctionnant en contre-réaction.

5. Etage de couplage suivant la revendication 4, caractérisé par le fait qu'on utilise comme transistors (T1, T2), des transistors complémentaires qui sont branchés tous les deux en émetteurs-suiveurs la branche de contre-réaction (G) de l'élément amplificateur (3) étant raccordée, sur le côté de l'extrémité, au point de jonction (P1), constituant la sortie (A) de l'étage de puissance (B), de deux bornes de même type des transistors (T1, T2), et que la sortie (a1) de l'élément amplificateur (3) est reliée par l'intermédiaire d'au moins un commutateur électronique commandable (S1, S2) aux bornes de base des transistors (T1, T2).

6. Etage de couplage suivant la revendication 5, caractérisé par le fait qu'on utilise les bornes d'émetteur des transistors complémentaires (T1, T2) en tant que bornes de même type reliées entre elles.

7. Etage de couplage suivant la revendication 5, caractérisé par le fait qu'on utilise des transistors de puissance bipolaire en tant que transistors complémentaires (T1, T2).

8. Etage de couplage suivant l'une des revendications 5 à 7, caractérisé par le fait qu'il est prévu deux commutateurs électroniques commandables (S1, S2), qui sont branchés directement en amont des bornes de base des transistors complémentaires (T1, T2).

9. Etage de couplage suivant l'une des revendications 2 à 8, caractérisé par le fait qu'on utilise des transistors comme commutateurs électroniques commandables (S1, S2).

10. Etage de couplage suivant l'une des revendications 2 à 6, caractérisé par le fait que les bornes de commande des commutateurs électroniques commandables (S1, S2) sont chargées par un signal actif pendant la durée d'un profil d'impulsions.

11. Etage de couplage suivant l'une des revendications 1 à 10, caractérisé par le fait que le filtre sélectif (F1) est réalisé sous la forme d'un filtre LC.

12. Etage de couplage suivant la revendication 3, caractérisé par le fait que la borne de base du premier transistor (T1) branché en émetteur-suiveur est reliée par l'intermédiaire du premier commutateur électronique commandable (S1) à la sortie (a1) de l'élément amplificateur (3) couplé par contre-réaction, que le second transistor (T2), dont la voie de commande est branchée en série avec celle du premier transistor (T1), est du même type que le premier transistor (T1), que la borne de base du second transistor (T2) est reliée à la prise (a2) d'un diviseur de tension (R4, R5) branché entre les pôles de la source de tension ($\pm$), le diviseur de tension (R4, R5) pouvant être raccordé par l'intermédiaire du second commutateur commandable (S1) à un pôle (+) de la source de tension, et que la prise (a2) du diviseur de tension (R4, R5) est reliée par l'intermédiaire d'un condensateur (C2) à la borne, tournée vers le premier transistor (T1), d'une résistance auxiliaire (R3) disposée entre ce transistor (T1) et un pôle (+) de la source de tension (figure 8).

FIG 1

FIG 2

FIG 3

FIG 4

FIG 5

FIG 6

FIG 7

FIG 8